# EUROPÄISCHE PATENTSCHRIFT

(11) **EP 3 810 472 B1**
(45) Veröffentlichungstag und Bekanntmachung des Hinweises auf die Patenterteilung: **01.01.2025**
(21) Anmeldenummer: 19724747.1
(22) Anmeldetag: 27.04.2019
(51) Int. Cl.: B60W 30/16, B60W 50/00

(54) **VERFAHREN ZUM BETREIBEN EINES FAHRZEUGS UND STEUERGERÄT**
METHOD FOR OPERATING A VEHICLE, AND CONTROL DEVICE
PROCÉDÉ DE FONCTIONNEMENT D'UN VÉHICULE ET DISPOSITIF DE COMMANDE

(30) Priorität: 21.06.2018 DE 102018210074; 24.07.2018 DE 102018212296
(43) Veröffentlichungstag der Anmeldung: 28.04.2021
(73) Patentinhaber: Robert Bosch GmbH, 70442 Stuttgart (DE)
(72) Erfinder: BAIER, Sebastian, 71634 Ludwigsburg (DE); LUCAS, Bernhard, 69190 Walldorf (DE); SCHORI, Thorsten, 70193 Stuttgart (DE)
(86) Internationale Anmeldenummer: PCT/EP2019/060832
(87) Internationale Veröffentlichungsnummer: WO 2019/242914

(56) Entgegenhaltungen:
- DE-A1- 102007 031 543
- JP-A- 2010 143 323
- US-A1- 2004 195 022

## Beschreibung

### Gebiet der Erfindung

Die Erfindung betrifft ein Verfahren zum Betreiben eines Fahrzeugs und ein Steuergerät für ein Fahrzeug.

### Stand der Technik

Bei einem Fahrzeug mit einem Abstandsregeltempomat wird eine Motorleistung so geregelt, dass eine eingestellte Sollgeschwindigkeit eingehalten wird. Zusätzlich wird die Motorleistung so geregelt, dass ein situationsabhängiger Sollabstand zu einem vorausfahrenden Fahrzeug eingehalten wird. Wenn ein Fahrer des Fahrzeugs den Abstandsregeltempomat durch ein Betätigen eines Fahrpedals des Fahrzeugs übertritt, wird die Motorleistung entsprechend einer Winkelstellung des Fahrpedals erhöht. Wenn der Fahrer auf ein Bremspedal des Fahrzeugs tritt, wird der Abstandsregeltempomat deaktiviert.

US 2004/195022 A1 beschreibt ein Antriebssteuergerät für ein Fahrzeug. DE 10 2007 031543 A1 beschreibt ein Verfahren zur Sollabstandsvorgabe bei einer Geschwindigkeitsregelung auf einen vorgegebenen Sollabstand. JP 2010 143323 A beschreibt eine Steuerung zum Kontrollieren von Abständen zwischen Fahrzeugen.

### Offenbarung der Erfindung

Vor diesem Hintergrund werden mit dem hier vorgestellten Ansatz ein Verfahren zum Betreiben eines Fahrzeugs und ein Steuergerät für ein Fahrzeug, sowie schließlich ein entsprechendes Computerprogrammprodukt und ein maschinenlesbares Speichermedium gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung können in vorteilhafter Weise ermöglichen, ein Auffahren auf ein vorausfahrendes Fahrzeug auch beim Übertreten eines Abstandsregeltempomaten eines Fahrzeugs zu verhindern.

Es wird ein Verfahren zum Betreiben eines Fahrzeugs vorgeschlagen, wobei bei aktiviertem Abstandsregeltempomat ansprechend auf einen durch ein Übertreten eines Fahrpedals des Fahrzeugs angezeigten Beschleunigungswunsch eines Fahrers des Fahrzeugs auf einen fahrpedalgesteuerten Abstandsregler gewechselt wird, wobei der Abstandsregeltempomat einen Leistungssollwert für einen Antrieb des Fahrzeugs in Abhängigkeit von einer aktuellen Geschwindigkeit des Fahrzeugs und in Abhängigkeit von einem aktuellen Abstand zu einem vorausfahrenden Fahrzeug derart regelt, dass der Abstand innerhalb eines Abstandstoleranzbereichs bleibt, wenn der Abstand im Wesentlichen einem geschwindigkeitsabhängigen Sollabstand entspricht, wobei der Abstandsregler den Beschleunigungswunsch in Abhängigkeit von dem aktuellen Abstand in den Leistungssollwert umsetzt, wobei eine Änderung des Leistungssollwerts umso geringer wird, je näher der aktuelle Abstand an einem Abstandszielwert ist, wobei der Abstandszielwert geringer als der Sollabstand ist, dadurch gekennzeichnet, dass ansprechend auf ein Ende des Beschleunigungswunschs von dem fahrpedalgesteuerten Abstandsregler zurück zur Verwendung des Abstandsregeltempomaten gewechselt wird, sodass das Fahrzeug wieder mit dem Sollabstand zum Fremdfahrzeug fährt, sobald der Fahrer den Fuß vom Fahrpedal nimmt.

Ideen zu Ausführungsformen der vorliegenden Erfindung können unter anderem als auf den nachfolgend beschriebenen Gedanken und Erkenntnissen beruhend angesehen werden.

Unter einem Abstandsregeltempomat kann ein Regler in einem Steuergerät eines Fahrzeugs verstanden werden, der einen Leistungssollwert für einen Antrieb des Fahrzeugs in Abhängigkeit von einer aktuellen Geschwindigkeit des Fahrzeugs und in Abhängigkeit von einem aktuellen Abstand zu einem vorausfahrenden Fahrzeug regelt. Das vorausfahrende Fahrzeug kann als Fremdfahrzeug bezeichnet werden.

Der Leistungssollwert wird von dem Abstandsregeltempomat geregelt, bis die aktuelle Geschwindigkeit eine eingestellte Sollgeschwindigkeit erreicht. Entspricht die Geschwindigkeit im Wesentlichen der Sollgeschwindigkeit, regelt der Abstandsregeltempomat den Leistungssollwert so, dass die Geschwindigkeit innerhalb eines eingestellten Geschwindigkeitstoleranzbereichs um die Sollgeschwindigkeit bleibt. Ist die Geschwindigkeit geringer als die Sollgeschwindigkeit, wird der Leistungssollwert erhöht. Ist die Geschwindigkeit größer als die Sollgeschwindigkeit, wird der Leistungssollwert verringert. Die Geschwindigkeit wird innerhalb des Geschwindigkeitstoleranzbereichs gehalten, so lange der aktuelle Abstand zu einem vorausfahrenden Fahrzeug größer als ein vorgegebener, geschwindigkeitsabhängiger Sollabstand ist. Entspricht der Abstand im Wesentlichen dem Sollabstand, wird der Leistungssollwert von dem Abstandstempomat geregelt, sodass der Abstand innerhalb eines Abstandstoleranzbereichs bleibt. Ist der Abstand größer als der Sollabstand, wird der Leistungssollwert erhöht. Ist der Abstand kleiner als der Sollabstand, wird der Leistungssollwert verringert. Verkleinert sich der Abstand schneller, als durch den reduzierten Leistungssollwert ausgeglichen werden kann, wird ein Bremssystem des Fahrzeugs aktiviert, um den Abstand wieder auf den Sollabstand zu vergrößern. Der Abstand kann durch einen geschwindigkeitsunabhängigen Zeitschlitz ausgedrückt werden, da eine pro Zeiteinheit zurückgelegte Strecke abhängig von der Geschwindigkeit ist.

Ein Beschleunigungswunsch eines Fahrers des Fahrzeugs wird über ein Fahrpedal des Fahrzeugs erfasst. Dabei wird ein Übertreten des Fahrpedals erkannt, wenn beispielsweise ein aktueller Winkel des Fahrpedals größer als ein Winkel ist, der dem momentan durch den Abstandsregeltempomat eingestellten Leistungssollwert entspricht.

Ein fahrpedalgesteuerter Abstandsregler kann ein Regler in dem Steuergerät sein. Der Abstandsregler setzt den Beschleunigungswunsch in Abhängigkeit von dem aktuellen Abstand in den Leistungssollwert um. Eine Änderung des Beschleunigungswunschs wird dabei abhängig von dem aktuellen Abstand in eine Änderung des Leistungssollwerts umgesetzt. Je näher der aktuelle Abstand an einem Abstandszielwert ist, umso geringer wird die Änderung des Leistungssollwerts. Wenn das Fremdfahrzeug abbremst und der Abstandszielwert dadurch nicht eingehalten wird, wird der Beschleunigungswunsch reduziert und bei Bedarf wird ein Bremssystem des Fahrzeugs angesteuert, um das Fahrzeug ebenfalls abzubremsen.

Ebenfalls kann der Leistungssollwert bei Annäherung an ein Fremdfahrzeug ohne Änderung des Beschleunigungswunschs (Beschleunigungswunsch = 0) reduziert werden, um den Abstandszielwert einzuhalten. (Beispiel: Ego-Fzg fährt mit 150 km/h oder beschleunigt und nähert sich mit konstantem Fahrpedalwinkel einem Fzg, das 120 km/h fährt). Der Abstandszielwert ist geringer als der Sollabstand.

Ansprechend auf ein Ende des Beschleunigungswunschs wird von dem fahrpedalgesteuerten Abstandsregelmodus wieder zurück zur Verwendung des Abstandsregeltempomaten gewechselt. Dadurch fährt das Fahrzeug wieder dem Sollabstand zum Fremdfahrzeug, beziehungsweise kann das Fahrzeug wieder mit der Sollgeschwindigkeit fahren, sobald der Fahrer den Fuß vom Fahrpedal nimmt.

Ansprechend auf eine Verzögerungsanforderung durch ein Betätigen eines Bremspedals des Fahrzeugs kann auf den fahrpedalgesteuerten Abstandsregler gewechselt werden. Dadurch wird der Abstand nach dem Bremsvorgang weiter überwacht und bei einer Verringerung des Abstands hin zum Abstandszielwert oder unter den Abstandszielwert wird der Beschleunigungswunsch reduziert und bei Bedarf wird automatisch abgebremst, um einen minimalen Abstand zu bewahren.

Im fahrpedalgesteuerten Abstandsregelmodus kann der Abstandszielwert zu dem vorausfahrenden Fahrzeug in Abhängigkeit von dem Beschleunigungswunsch eingestellt werden. Der Abstandszielwert kann in Zeitschlitzen eingestellt werden. Der kleinste Abstandszielwert entspricht einem minimalen Sicherheitsabstand. Je größer der Beschleunigungswunsch ist, umso kleiner kann der Abstandszielwert eingestellt werden. Für Überholvorgänge kann ein kleinerer Abstand eingestellt werden, als für eine konstante Folgefahrt auf der Autobahn.

Das Verfahren kann beispielsweise in Software oder Hardware oder in einer Mischform aus Software und Hardware beispielsweise in einem Steuergerät implementiert sein.

Der hier vorgestellte Ansatz schafft ferner ein Steuergerät für ein Fahrzeug, das dazu ausgebildet ist, die Schritte einer Variante des hier vorgestellten Verfahrens in entsprechenden Einrichtungen durchzuführen, anzusteuern bzw. umzusetzen.

Das Steuergerät kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale des Steuergeräts und des Verfahrens in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Darstellung eines Fahrzeugs mit einem Steuergerät gemäß einem Ausführungsbeispiel; und
die Figuren 2a und 2b zeigen Darstellungen eines Fahrzeugs hinter einem Fremdfahrzeug bei der Verwendung eines Abstandsregeltempomaten und eines fahrpedalgesteuerten Abstandsreglers gemäß einem Ausführungsbeispiel.

Die Figuren sind lediglich schematisch und nicht maßstabsgetreu. Gleiche Bezugszeichen bezeichnen in den Figuren gleiche oder gleichwirkende Merkmale.

Aktuell gibt es in Fahrzeugen unterschiedliche Fahrerassistenzfunktionen. Unter anderem dienen Cruise Control (CrCtl), Longitudinal Limiter (LLim), Advanced Longitudinal Limiter (ALLim) und Adaptive Cruise Control (ACC) dem Fahrer für einen erhöhten Komfort und mehr Sicherheit. Darüber hinaus leisten weitere Assistenzfunktionen einen Sicherheitsgewinn durch Abstandswarnungen und Notbremseingriffe.

Die ACC-Funktionalität ist in bestimmten Situationen vorsichtiger ausgelegt als manche Fahrer selbst fahren würden. In diesen Situationen hat der Fahrer die Möglichkeit, bei einem herkömmlichen System per Fahrpedal mehr Moment anzufordern als die ACC-Funktion. Dies führt allerdings dazu, dass die herkömmliche ACC-Funktion inaktiv ist (Override-Status) und auf vorausfahrende Objekte nicht bremst. Beispielsweise kann bei einem Überholmanöver auf der Autobahn ein Übertreten per Fahrpedal dazu führen, dass ein Bremsen des zu überholenden Fahrzeugs nicht berücksichtigt wird und das eigene Fahrzeug daher nicht bremst.

### Ausführungsformen der Erfindung

Bei dem hier vorgestellten Ansatz wird die bestehende ACC - Funktion um einen Auffahrschutz (Dynamic Distance/Drive Assist, DDA) mit einem dynamisch dem Fahrerwunsch angepassten Abstands- und / oder Geschwindigkeitspuffer ergänzt.

Bei dem hier vorgestellten Ansatz wird die DDA-Funktion im Falle des Übertretens verwendet. So hat der Fahrer die Möglichkeit, zu beschleunigen, wird jedoch bei einem Bremsvorgang des zu überholenden Fahrzeugs durch das Einhalten eines gewünschten Abstands noch geschützt. Die DDA kann dabei auf eine geringe Zeitlücke eingestellt sein oder fortlaufend den Soll-Abstand auf Fahrpedalwunsch anpassen. Letzteres führt dazu, dass der Fahrer bei einer gewünschten Beschleunigung per Fahrpedal kaum/nicht eingeschränkt wird, wohl aber bei einem Bremsvorgang des vorausfahrenden Fahrzeugs gebremst bzw. geschützt wird.

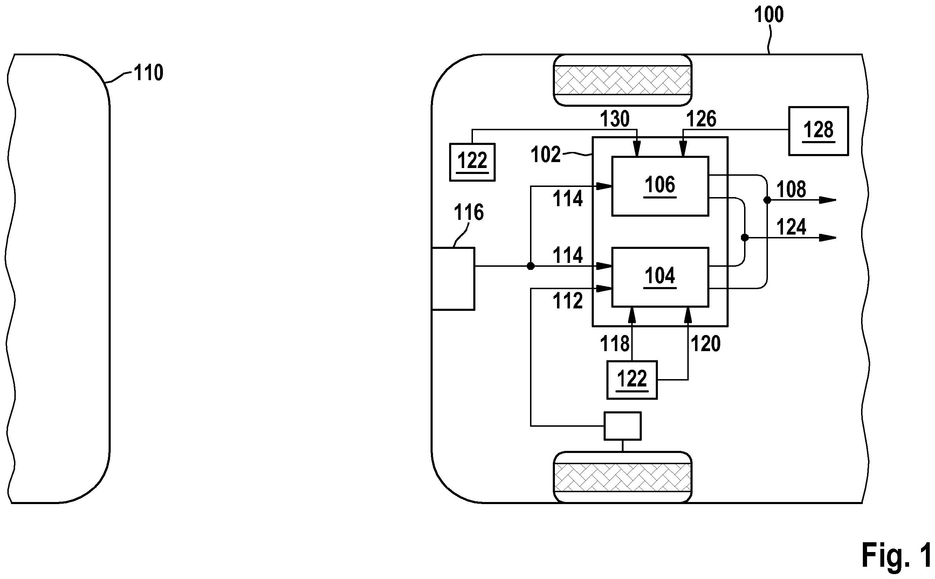

Fig. 1 zeigt eine Darstellung eines Fahrzeugs 100 mit einem Steuergerät 102 gemäß einem Ausführungsbeispiel. Im Steuergerät 102 sind ein Abstandsregeltempomat 104 und ein Abstandsregler 106 implementiert. Das Steuergerät 102 kann weitere, hier nicht beschriebene Funktionen aufweisen.

Der Abstandsregeltempomat 104 ist ein Regler für einen Leistungssollwert 108 des Fahrzeugs 100. Der Leistungssollwert 108 repräsentiert eine von einem Antrieb des Fahrzeugs 100 abzugebende Leistung. Wenn der Abstandsregeltempomat 104 aktiv ist, regelt er die abgegebene Leistung in Abhängigkeit von einer aktuellen Geschwindigkeit des Fahrzeugs 100 und eines aktuellen Abstands zwischen dem Fahrzeug und einem vorausfahrenden Fahrzeug 110.

Der Abstandsregeltempomat 104 liest dazu einen Geschwindigkeitswert 112 und einen Abstandswert 114 ein. Der Geschwindigkeitswert 112 repräsentiert die aktuelle Geschwindigkeit. Der Abstandswert 114 repräsentiert den aktuellen Abstand zu dem vorausfahrenden Fahrzeug 110. Der aktuelle Abstand wird durch einen Abstandssensor 116 des Fahrzeugs 100 gemessen.

Der Abstandsregeltempomat 104 liest ferner einen Sollgeschwindigkeitswert 118 und einen Sollabstandswert 120 ein. Der Sollgeschwindigkeitswert 118 repräsentiert eine Sollgeschwindigkeit des Fahrzeugs und wird von einem Fahrer des Fahrzeugs 100 über eine Schnittstelle 122 eingestellt. Der Sollabstandswert 120 repräsentiert einen Sollabstand zu dem vorausfahrenden Fahrzeug 114. Der Sollabstandswert 120 wird ebenso von dem Fahrer über die Schnittstelle 122 oder eine hier nicht dargestellte weitere Schnittstelle eingestellt.

Der Sollabstand ist geschwindigkeitsabhängig. Bei größerer Geschwindigkeit ist der Sollabstand größer, als bei kleinerer Geschwindigkeit. Daher kann der Sollabstandswert 120 als Zeitlücke eingelesen werden, die geschwindigkeitsunabhängig ist. Die Zeitlücke beschreibt eine Zeitdauer, bis das Fahrzeug 100 den gleichen Punkt überfährt, wie zuvor das vorausfahrende Fahrzeug 110.

Der Abstandsregeltempomat 104 erhöht den Leistungssollwert 108, wenn die Geschwindigkeit des Fahrzeugs 100 geringer als die Sollgeschwindigkeit ist. Umgekehrt wird der Leistungssollwert 108 verringert, wenn die Geschwindigkeit größer als die Sollgeschwindigkeit ist. Zusätzlich wird der Leistungssollwert 108 verringert, wenn der Abstand kleiner als der Sollabstand ist. Dadurch sinkt die Geschwindigkeit. Solange die Geschwindigkeit kleiner als die Sollgeschwindigkeit ist, wird der Leistungssollwert 108 erhöht, wenn der Abstand größer als der Sollabstand ist.

Wenn der Abstand kleiner als der Sollabstand wird, beispielsweise weil das vorausfahrende Fahrzeug 110 bremst, gibt der Abstandsregeltempomat 104 einen Bremssollwert 124 für ein Bremssystem des Fahrzeugs 100 aus, um das Fahrzeug 100 abzubremsen, bis der Abstand wieder mit dem Sollabstand übereinstimmt.

Der Abstandsregler 106 ist ebenfalls ein Regler für den Leistungssollwert 108. Wenn der Abstandsregler 106 aktiv ist, regelt er die abgegebene Leistung in Abhängigkeit von dem Abstand und einem Beschleunigungswunsch des Fahrers. Der Beschleunigungswunsch wird durch einen Fahrpedalwinkel 126 eines Fahrpedals 128 des Fahrzeugs 100 repräsentiert. Der Beschleunigungswunsch wird unter Verwendung des Abstands in den Leistungssollwert 108 umgesetzt.

Dazu liest der Abstandsregler 106 einen Abstandszielwert 130 ein. Der Abstandszielwert 130 repräsentiert einen Mindestabstand, der von dem Fahrer an der Schnittstelle 122 oder einer anderen nicht dargestellten Schnittstelle vorgegeben wird.

Der Mindestabstand ist geschwindigkeitsabhängig. Bei größerer Geschwindigkeit ist der Mindestabstand größer, als bei kleinerer Geschwindigkeit. Daher kann der Abstandszielwert 130 ebenfalls als Zeitlücke eingelesen werden, die geschwindigkeitsunabhängig ist. Der Mindestabstand kann kleiner sein, als der Sollabstand.

So lange der aktuelle Abstand außerhalb eines Pufferbereichs vor dem Mindestabstand ist, wird der Beschleunigungswunsch direkt in den Leistungssollwert 108 umgesetzt. Liegt der Abstand innerhalb des Pufferbereichs, wird der Beschleunigungswunsch in reduzierter Form in den Leistungssollwert 108 umgesetzt. Je näher der Abstand am Mindestabstand liegt, umso weniger wird der Beschleunigungswunsch in den Leistungssollwert 108 umgesetzt. Entspricht der Abstand dem Mindestabstand, regelt der Abstandsregler 106 den Leistungssollwert 108 so, dass der Mindestabstand nicht unterschritten wird.

Wenn eine Reduktion des Leistungssollwert 108 nicht ausreicht, um den Abstandszielwert 130 zu erreichen, gibt der Abstandsregler 106 den Bremssollwert 124 für das Bremssystem des Fahrzeugs 100 aus, um das Fahrzeug 100 abzubremsen, bis der Abstand wieder mit dem Mindestabstand übereinstimmt.

In einem Ausführungsbeispiel kann der Fahrer den Mindestabstand beeinflussen. Wenn der Fahrer den Fahrpedalwinkel 126 erhöht, sodass er oberhalb eines Schwellwerts liegt, oder / und mit einer Winkelgeschwindigkeit verändert, die oberhalb eines Schwellenwerts liegt, wird die mit dem eingestellten Abstandszielwert 130 korrespondierende Zeitlücke verkleinert. Insbesondere wird die Zeitlücke schrittweise verkleinert. Die Zeitlücke kann minimal so klein werden, wie eine gesamte Reaktionszeit des Systems.

Wenn der Fahrer über das Fahrpedal 128 wieder einen reduzierten Beschleunigungswunsch signalisiert, wird die Zeitlücke wieder vergrößert.

Bei dem hier vorgestellten Ansatz wird von dem Abstandsregeltempomat 104 auf den Abstandsregler 106 gewechselt, wenn der Fahrer über das Fahrpedal 128 einen Beschleunigungswunsch einstellt, der einem größeren Leistungssollwert 108 entspricht, als der aktuell vom Abstandsregeltempomat 104 ausgegebene Leistungssollwert 108. So kann der Fahrer den Abstandsregeltempomat 104 übertreten und das Fahrzeug über die Sollgeschwindigkeit hinaus beschleunigen. Der erforderliche Abstand zum vorausfahrenden Fahrzeug 110 wird dennoch weiter überwacht und im Notfall durch einen Bremseingriff erhalten.

Wenn der Beschleunigungswunsch wieder einem geringeren Leistungssollwert 108 entspricht, als der der aktuell vom Abstandsregeltempomat 104 ausgegebene Leistungssollwert 108, wird von dem Abstandsregler 106 wieder auf den Abstandsregeltempomat 104 gewechselt.

In einem Ausführungsbeispiel wird von dem Abstandsregeltempomat 104 auf den Abstandsregler 106 gewechselt, wenn der Fahrer ein Bremspedal des Fahrzeugs 100 betätigt. Dadurch bleibt die Überwachung des Abstands zum vorausfahrenden Fahrzeug 110 erhalten und das Fahrzeug 100 wird bereits beim Unterschreiten des eingestellten Abstandszielwerts 130 sanft gebremst, bevor ein eventuell vorhandener Notbremsassistent einen harten Bremseingriff ausführen wird.

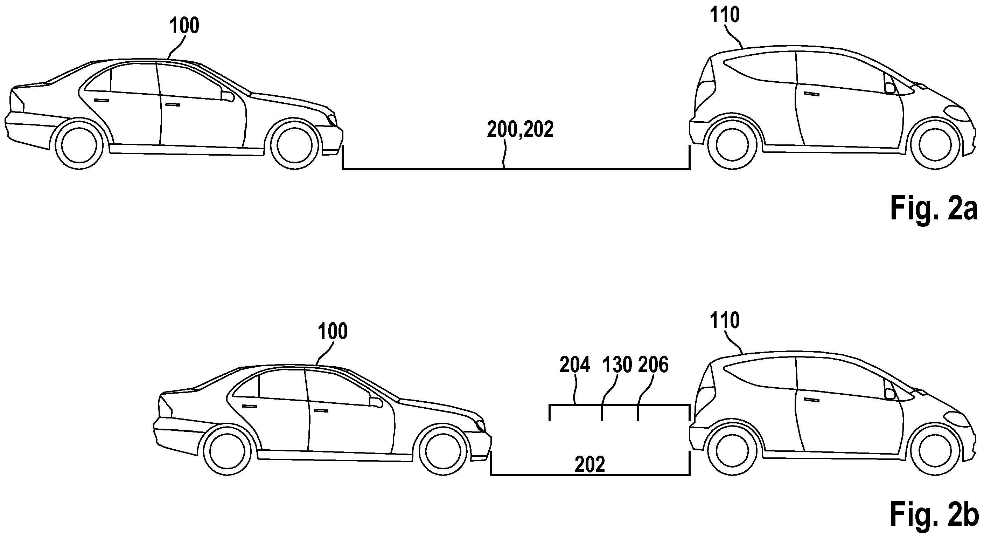

Die Figuren 2a und 2b zeigen Darstellungen eines Fahrzeugs 100 hinter einem Fremdfahrzeug 110 bei der Verwendung eines Abstandsregeltempomaten und eines Abstandsreglers gemäß einem Ausführungsbeispiel. Der Abstandsregeltempomat und der Abstandsregler sind wie in Fig. 1 auf einem Steuergerät des Fahrzeugs 100 implementiert.

In Fig. 2a fährt das Fahrzeug unter Verwendung des Abstandsregeltempomaten mit dem Sollabstand 200 hinter dem Fremdfahrzeug 110. Der Abstandsregeltempomat hat die Geschwindigkeit des Fahrzeugs 100 durch regelnde Eingriffe in die bereitgestellte Antriebsleistung im Wesentlichen an die Geschwindigkeit des Fremdfahrzeugs angepasst. Ein aktueller Abstand 202 wird bei näherungsweise konstanter Geschwindigkeit innerhalb eines Toleranzbereichs um den Sollabstand 200 konstant gehalten.

In Fig. 2b fährt das Fahrzeug 100 unter Verwendung des Abstandsreglers mit einem geringeren Abstand 202 zu dem Fremdfahrzeug 110. Der Fahrer hat den Abstandsregeltempomaten übertreten, indem er auf das Fahrpedal getreten ist und das Fahrpedal um einen größeren Fahrpedalwinkel ausgelenkt hat, als einem momentan von dem Abstandsregeltempomaten bereitgestellten Leistungssollwert entspricht. Daraufhin hat das Steuergerät von dem Abstandsregeltempomaten auf den Abstandsregler gewechselt.

Im Abstandsregelbetrieb wird der Fahrpedalwinkel in den Leistungssollwert umgesetzt, bis der Abstand 202 innerhalb des Pufferbereichs 204 um den Abstandszielwert 130 liegt. Innerhalb des Pufferbereichs 204 wird der Fahrpedalwinkel zunehmend gedämpft umgesetzt. Mit anderen Worten wird der Leistungssollwert reduziert, obwohl der Fahrpedalwinkel gleich bleibt.

Wenn der Abstand 202 dem Abstandszielwert 130 entspricht, wird der Leistungssollwert soweit reduziert, dass das Fahrzeug 100 den Abstandszielwert 130 zu dem Fremdfahrzeug 110 hält.

Wenn das Fremdfahrzeug 110 in der Situation langsamer wird oder bremst, wird der Leistungssollwert weiter reduziert und nach Bedarf das Bremssystem des Fahrzeugs 100 aktiviert.

Wenn der vorgewählte Abstandszielwert 130 für den Fahrer gefühlt zu weit entfernt von dem Fremdfahrzeug 110 ist, dann kann er den Abstandszielwert 130 durch eine Fahrpedalbetätigung verringern. Der Abstandszielwert kann dabei soweit verringert werden, dass das Fahrzeug 100 nur noch einen geschwindigkeitsabhängigen Sicherheitsabstand 206 zum Fremdfahrzeug 110 einhält.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Betreiben eines Fahrzeugs (100), wobei bei aktiviertem Abstandsregeltempomat (104) ansprechend auf einen durch ein Übertreten eines Fahrpedals (128) des Fahrzeugs (100) angezeigten Beschleunigungswunsch eines Fahrers des Fahrzeugs auf einen fahrpedalgesteuerten Abstandsregler (106) gewechselt wird,
wobei der Abstandsregeltempomat (104) einen Leistungssollwert (108) für einen Antrieb des Fahrzeugs (100) in Abhängigkeit von einer aktuellen Geschwindigkeit des Fahrzeugs (100) und in Abhängigkeit von einem aktuellen Abstand (202) zu einem vorausfahrenden Fahrzeug (110) derart regelt, dass der Abstand (202) innerhalb eines Abstandstoleranzbereichs bleibt, wenn der Abstand (202) im Wesentlichen einem geschwindigkeitsabhängigen Sollabstand (200) entspricht,
wobei der Abstandsregler (106) den Beschleunigungswunsch in Abhängigkeit von dem aktuellen Abstand (202) in den Leistungssollwert (108) umsetzt,
wobei eine Änderung des Leistungssollwerts (108) umso geringer wird, je näher der aktuelle Abstand (202) an einem Abstandszielwert (130) ist,
wobei der Abstandszielwert (130) geringer als der Sollabstand (200) ist, **dadurch gekennzeichnet, dass** ansprechend auf ein Ende des Beschleunigungswunschs von dem fahrpedalgesteuerten Abstandsregler (106) zurück zur Verwendung des Abstandsregeltempomaten (104) gewechselt wird, [sodass das Fahrzeug (100) wieder mit dem Sollabstand (200) zum Fremdfahrzeug (110) fährt, sobald der Fahrer den Fuß vom Fahrpedal (128) nimmt.

2. Verfahren gemäß einem der vorhergehenden Ansprüche, bei dem ansprechend auf eine Verzögerungsanforderung durch ein Betätigen eines Bremspedals des Fahrzeugs (100) ebenfalls auf den fahrpedalgesteuerten Abstandsregler (106) gewechselt wird.

3. Verfahren gemäß einem der vorhergehenden Ansprüche, bei dem während der Verwendung des fahrpedalgesteuerten Abstandsreglers (105) ein Abstandszielwert (130) zu einem vorausfahrenden Fahrzeug (110) in Abhängigkeit von dem Beschleunigungswunsch eingestellt wird.

4. Steuergerät (102) für ein Fahrzeug, wobei das Steuergerät (102) dazu ausgebildet ist, das Verfahren gemäß einem der vorhergehenden Ansprüche in entsprechenden Einrichtungen auszuführen, umzusetzen und/oder anzusteuern.

5. Computerprogrammprodukt, umfassend Befehle, die bei der Ausführung des Programms durch einen Computer diesen veranlassen, das Verfahren gemäß einem der Ansprüche 1-3 auszuführen.

6. Maschinenlesbares Speichermedium, auf dem das Computerprogrammprodukt gemäß Anspruch 5 gespeichert ist.

## Claims

1. Method for operating a vehicle (100), wherein, when the adaptive cruise control (104) is activated, the method involves switching to an accelerator pedal-controlled distance controller (106) in response to an acceleration request of a driver of the vehicle indicated by an override of an accelerator pedal (128) of the vehicle (100),
wherein the adaptive cruise control (104) controls a power setpoint value (108) for a drive of the vehicle (100) as a function of a current speed of the vehicle (100) and as a function of a current distance (202) to a vehicle (110) ahead in such a way that the distance (202) remains within a distance tolerance range if the distance (202) substantially corresponds to a speed-dependent setpoint distance (200),
wherein the distance controller (106) converts the acceleration request into the power setpoint value (108) as a function of the current distance (202), wherein a change in the power setpoint value (108) becomes smaller, the closer the current distance (202) is to a distance target value (130), wherein the distance target value (130) is less than the setpoint distance (200), **characterized in that**, in response to an end of the acceleration request, the method involves switching from the accelerator pedal-controlled distance controller (106) back to the use of the adaptive cruise control (104), so that the vehicle (100) travels again with the setpoint distance (200) to the third-party vehicle (110) as soon as the driver takes their foot off the accelerator pedal (128).

2. Method according to any of the preceding claims, wherein the method likewise involves switching to the accelerator pedal-controlled distance controller (106) in response to a deceleration request by actuation of a brake pedal of the vehicle (100).

3. Method according to any of the preceding claims, wherein, during the use of the accelerator pedal-controlled distance controller (105), a distance target value (130) to a vehicle (110) ahead is set as a function of the acceleration request.

4. Control unit (102) for a vehicle, wherein the control unit (102) is designed to carry out, implement and/or control the method according to any of the preceding claims in corresponding devices.

5. Computer program product comprising instructions which, when the program is executed by a computer, cause said computer to carry out the method according to any of Claims 1-3.

6. Machine-readable storage medium, on which the computer program product according to Claim 5 is stored.

## Revendications

1. Procédé permettant de faire fonctionner un véhicule (100), dans lequel, lorsque le régulateur de vitesse adaptatif (104) est activé, on passe à un régulateur de distance (106) commandé par la pédale d'accélérateur en réponse à un souhait d'accélération d'un conducteur du véhicule, indiqué par un actionnement à fond d'une pédale d'accélérateur (128) du véhicule (100),
dans lequel le régulateur de vitesse adaptatif (104) régule une valeur de consigne de puissance (108) pour un entraînement du véhicule (100) en fonction d'une vitesse actuelle du véhicule (100) et en fonction d'une distance actuelle (202) par rapport à un véhicule qui précède (110) de telle sorte que la distance (202) reste dans une plage de tolérance de distance si la distance (202) correspond substantiellement à une distance de consigne (200) dépendant de la vitesse,
dans lequel le régulateur de distance (106) convertit le souhait d'accélération en fonction de la distance actuelle (202) en valeur de consigne de puissance (108), dans lequel un changement de la valeur de consigne de puissance (108) diminue d'autant que la distance actuelle (202) est proche d'une valeur cible de distance (130), la valeur cible de distance (130) étant inférieure à la distance de consigne (200),
**caractérisé en ce qu'**en réponse à la fin du souhait d'accélération, on repasse du régulateur de distance (106) commandé par la pédale d'accélérateur à l'utilisation du régulateur de vitesse adaptatif (104) de sorte que le véhicule (100) roule à nouveau à la distance de consigne (200) par rapport au véhicule tiers (110) dès que le conducteur lâche la pédale d'accélérateur (128).

2. Procédé selon l'une quelconque des revendications précédentes, dans lequel, en réponse à une demande de ralentissement, on passe également au régulateur de distance (106) commandé par la pédale d'accélérateur par un actionnement d'une pédale de frein du véhicule (100).

3. Procédé selon l'une quelconque des revendications précédentes, dans lequel, pendant l'utilisation du régulateur de distance (105) commandé par la pédale d'accélérateur, une valeur cible de distance (130) par rapport à un véhicule qui précède (110) est réglée en fonction du souhait d'accélération.

4. Appareil de commande (102) pour un véhicule, dans lequel l'appareil de commande (102) est conçu pour exécuter, mettre en oeuvre et/ou piloter le procédé selon l'une quelconque des revendications précédentes dans des dispositifs correspondants.

5. Produit de programme informatique, comprenant des instructions qui, lors de l'exécution du programme par un ordinateur, font que celui-ci exécute le procédé selon l'une des revendications 1 à 3.

6. Support de stockage lisible par machine sur lequel est stocké le produit de programme informatique selon la revendication 5.
